# EUROPEAN PATENT APPLICATION

(11) **EP 1 174 235 A1**
(43) Date of publication of application: **23.01.2002**
(21) Application number: 01906208.2
(22) Date of filing: 22.02.2001
(51) Int. Cl.: B29B 13/00, B29B 9/00, C08G 64/40, C08L 69/00

(54) **METHOD FOR HOLDING POLYCARBONATE PELLETS**

(30) Priority: 25.02.2000 JP 2000049297
(71) Applicant: TEIJIN LIMITED, Osaka-shi Osaka 541-0054 (JP)
(72) Inventor: FUNAKOSHI, Wataru, Teijin Limited, Iwakuni-shi, Yamaguchi 740-0014 (JP); KANEKO, Hiroaki, Teijin Limited, Iwakuni-shi, Yamaguchi 740-0014 (JP); SASAKI, Katsushi, Teijin Limited, Iwakuni-shi, Yamaguchi 740-0014 (JP)
(74) Representative: Hallybone, Huw George
(86) International application number: JP0101299
(87) International publication number: WO0162459

(57) **Abstract**

A method for maintaining polycarbonate pellets by maintaining the potential of electrostatic charge of polycarbonate pellets (A) having adhering foreign matter having a particle diameter of 0.5 to 10 µm in an amount of 10,000 pieces/g or less in a range of ±10 kV in steps up to the step of melting the polycarbonate pellets (A) for producing a polycarbonate molded article.

According to the present invention, there is provided a method of maintaining polycarbonate pellets having a remarkably smaller amount of foreign matter adhering to pellet surfaces, and there is provided a method advantageous for maintaining pellets for use in the field of optical disks.

## Description

### Detailed Description of the Invention

### Field of the Invention

The present invention relates to a method for maintaining polycarbonate pellets. More specifically, it relates to a method for maintaining polycarbonate pellets having a smaller amount of foreign matter adhering thereto such that no foreign matter further adheres during the steps of from production of pellets to molding thereof.

According to the present invention, there can be provided a method for maintaining clean polycarbonate pellets for which foreign matter such as the amount of soil and dirt (also called "dust") adhering to surfaces thereof is controlled, so that the present invention can provide a method advantageous for use in the field of optical disks, particularly digital video disks. In the present invention; the soil and dirt (dust) specifically refer to a fine powder of a metal such as stainless steel, fiber scraps, scraps of plastics such as Teflon®, sand grains and asbestos.

### Prior Art

Polycarbonate is excellent in mechanical properties such as impact resistance and is also excellent in heat resistance and transparency, and it is widely used. Polycarbonate obtained from bisphenol A (2,2-bis(4-hydroxyphenyl)propane) as a main dihydroxy compound is finding a rapid increase in demands thereof mainly in the use of optical disks typified by compact disks and CD-ROM in recent years.

When polycarbonate is used for information storage substrates such as an optical disk, it is known that when the number of foreign matter such as dust contained in the polycarbonate is large, errors take place many times in reading stored data and writing data.

As an example of studies made for decreasing the above foreign matter, for example, JP-A-3-217801 discloses an optical disk substrate for which the error rate is decreased by controlling foreign matter on the submicron order of 0.1 µm or less, as a foreign matter strength, to be 10,000 or less.

Further, JP-B-6-49320 discloses a method in which a polycarbonate raw material powder having a 0.5 to 1.0 µm dust quantity of 1.0 x 10⁴ pieces/g or less is used and a polycarbonate resin molding material having a 0.5 to 1.0 µm dust quantity of 1.0 x 10⁴ pieces/g or less is produced for optical use, by means of a vented extruder made of a specific material. JP-A-9-254151 discloses a method in which cooling water having an electric conductivity of 1 mS/cm or less is used when polycarbonate strands in a molten state are cooled and cut, to obtain polycarbonate pellets that are caused to have few crazes. It is described that it is preferred to use water having a 0.5 to 2.5 µm foreign matter quantity of 10⁵ pieces/ml or less as cooling water.

JP-A-6-270145 proposes a method in which an ionized gas is blown into a polycarbonate resin particle dropping passage from its lower portion and brought into contact with the polycarbonate resin powdery-particles passing inside the dropping passage to remove a fine powder, whereby synthetic resin particles having a 16-mesh pass fine powder content of 40 ppm or less and having little inclusion of foreign matter can be provided.

In the above conventional techniques, nothing is described concerning the amount of foreign matter adhering to pellet surfaces, and nothing is disclosed with regard to a technique of controlling the electrostatic charge potential of a resin to maintain a specific level of a foreign matter content including an amount of foreign matter adhering to pellet surfaces during the steps of from pelletization to molding. The above techniques therefore cannot be said to have fully overcome the problems.

In recent years, further, recording medium having a higher recording density than before, such as a digital video disk, have come to be used, and there are demanded a polycarbonate and a substrate that can attain lower error rates. For such polycarbonate substrates, working is carried out in a dust-free space called a clean room to obtain pellets having a smaller amount of foreign matter adhering to their surfaces.

In a method in which working is carried out in a clean room, the attainable amount of adhering foreign matter on the surfaces of pellets is limited, and the level of the amount is remains to be insufficient. Problems to be Solved by the Invention

For producing pellets, conventionally, attempts have been made to employ methods in which water having a smaller amount of foreign matter is used and importance is attached to an environment having a smaller amount of foreign matter so that pellets of a polycarbonate having a smaller amount of adhering foreign matter can be obtained. Concerning these methods, however, no method has been established for industrially producing and maintaining pellets of a polycarbonate almost free of foreign matter to meet with a higher density of a recording material. In view of the above fact, the present inventors sought to establish a method for industrially producing and maintaining polycarbonate pellets having a smaller amount of adhering foreign matter.

### Means to Solve the Problems

For obtaining a substrate that has a smaller content of foreign matter and causes errors at a lower rate in reading and writing data, the present inventors have made studies for means to maintain pellets having a smaller amount of surface-adhering foreign matter almost without causing further foreign matter to adhere, up to the use thereof for molding, and have arrived at the present invention.

According to the present invention, there is provided a method for maintaining polycarbonate pellets, which comprises maintaining the potential of electrostatic charge of polycarbonate pellets (A) having adhering foreign matter having a particle diameter of 0.5 to 10 µm in an amount of 10,000 pieces/g or less in a range of ±10 kV in steps up to the step of melting the polycarbonate pellets (A) for producing a polycarbonate molded article.

According to the method of the present invention, the amount of foreign matter adhering to surfaces of polycarbonate pellets can be decreased to make it as small as possible in molding the polycarbonate pellets to obtain disk information substrates, and as a result, there can be obtained optical disk substrates that have a smaller content of foreign matter and causes errors at a lower rate.

The method of the present invention will be explained more in detail hereinafter.

In the present invention, the polycarbonate refers to a polycondensate from an aromatic dihydroxy compound and a carbonate-bond-formable compound.

The polycarbonate in the present invention can be naturally a polycarbonate obtained by combining one or more of various monomers for controlling of a glass transition temperature, improving of fluidity, controlling optical properties such as improving of a refractive index and decreasing of a birefringence.

The aromatic dihydroxy compound is preferably selected from compounds of the following formula (1), 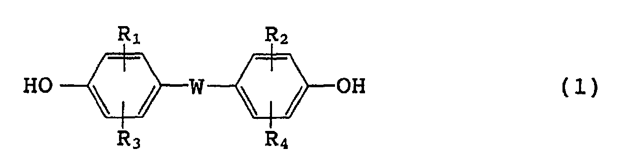 wherein each of R₁, R₂, R₃ and R₄ is independently a hydrogen atom, a halogen atom, an alkyl group having 12 carbon atoms or less, an aralkyl group or an aryl group, and W is an alkylidene group having 30 carbon atoms or less, an alkylene group, a cycloalkylidene group, a cycloalkylene group, a phenyl-substituted alkylene group, an oxygen atom, a sulfur atom, a sulfoxide group, a sulfone group or a direct bond.

Specific examples of the above aromatic dihydroxy compound include bis(4-hydroxyaryl)alkanes such as bis(4-hydroxyphenyl)methane, 2,2-bis(4-hydroxyphenyl)propane, 1,1-bis(4-hydroxyphenyl)ethane, 2,2-bis(4-hydroxy-3-methylphenyl)propane, 2,2-bis(4-hydroxyphenyl)heptane, 2,2-bis(4-hydroxy-3,5-dichlorophenyl)propane, 2,2-bis(4-hydroxy-3,5-dibromophenyl)propane, bis(4-hydroxyphenyl)phenylmethane, 4,4-dihydroxyphenyl-1,1'-m-diisopropylbenzene and 4,4'-dihydroxyphenyl-9,9-fluorene; bis(hydroxyaryl)cycloalkanes such as 1,1-bis(4-hydroxyphenyl)-3,3,5-trimethylcyclohexane, 1,1-bis(4-hydroxyphenyl)cyclohexane, 1-methyl-1-(4-hydroxyphenyl)-4-(dimethyl-4-hydroxyphenyl)methyl-cyclohexane, 4-[1-[3-(4-hydroxyphenyl)-4-methylcyclohexyl]-1-methylethyl]-phenol, 4,4'-[1-methyl-4-(1-methylethyl)-1,3-cyclohexandiyl]bisphenol and 2,2,2',2'-tetrahydro-3,3,3',3'-teteramethyl-1,1'-spirobis-[lH-indene]-6,6'-diol; dihydroxyaryl ethers such as bis(4-hydroxyphenyl) ether, bis(4-hydroxy-3,5-dichlorophenyl) ether and 4,4'-dihydroxy-3,3'-dimethylphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiarylsulfones such as 4,4'-dihydroxydiphenylsulfone and 4,4'-dihydroxy-3,3'-dimethyldiphenylsulfone; dihydroxydiarylisatins such as 4,4'-dihydroxydiphenyl-3,3'-isatin; dihydroxydiarylxanthenes such as 3,6-dihydroxy-9,9-dimethylxanthene; dihydroxybenzenes such as resorcin, 5-methylresorcin, 5-t-butylresorcin, 4-cumylresorcin, hydroquinone, 2-methylhydroquinone, 2-t-butylhydroquinone and 2-cumylhydroquinone; and dihydroxydiphenyls such as 4,4'-dihydroxydiphenyl and 3,3'-dichloro-4,4'-dihydroxydiphenyl.

Of these, 2,2-bis(4-hydroxyphenyl)propane (bisphenol A) is preferred since a compound which is stable as a monomer and has a smaller content of an impurity therein is easily commercially available.

Specific examples of the carbonate-bond-formable compound include phosgenes such as phosgen, trichloromethylchloro formate and bis(trichloromethyl) carbonate; diaryl carbonates such as diphenyl carbonate and ditolyl carbonate; dialkyl carbonates such as dimethyl carbonate and diethyl carbonate; and alkylaryl carbonates such as methylphenyl carbonate and ethylphenyl carbonate.

Of the phosgenes, phosgene is preferred. Of the carbonate diesters, diphenyl carbonate is preferred. These compounds may be used alone or in combination. Preferably, the carbonate diester compound is used in an excess amount of 1.01 to 1.20 mol per mole of the aromatic dihydroxy compound.

When a phosgene is used, preferably, a polycarbonate is produced by a solution polymerization method. When a carbonate ester having a carbonate bond is used, preferably, a polycarbonate is produced by a melt polymerization method.

The method of maintaining pellets, provided by the present invention, can be applied both to pellets from a polycarbonate produced by a melt polymerization method and pellets from a polycarbonate produced by a solution polymerization method. However, when a polycarbonate is produced by a melt polymerization method, phosgene and a halogen-containing solvent are not used, the content of an impurity formed from corrosion of an apparatus, etc., is small and the polycarbonate can be produced at a lower cost. Such a polymer is preferably used in these respects. Further, there may be used a method of solid polymerization in which an oligomer during polymerization is crystallized or a thin film polymerization method as required.

The above melt polymerization method and solution polymerization method will be explained below.

When a polycarbonate is produced by a melt polymerization method, an ester exchange catalyst is used.

The catalyst can be selected from an alkali metal compound, an alkaline earth metal compound or a nitrogen-containing basic compound.

The alkali metal compound and the alkaline earth metal compound include hydroxides, hydrides, carbonates, acetates, nitrates, nitrites, sulfites, cyanates, stearates, boro hydride, benzoates, hydrogenated phosphates and bisphenol or phenol salts of alkali metals and alkaline earth metals.

Specific examples of the alkali metal compound include sodium metal, potassium metal, sodium hydroxide, potassium hydroxide, lithium hydroxide, cesium hydroxide, rubidium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, cesium carbonate, potassium nitrate, sodium nitrite, lithium nitrite, sodium cyanate, potassium cyanate, lithium cyanate, cesium cyanate, sodium thiocyanate, potassium thiocyanate, cesium thiocyanate, sodium stearate, potassium stearate, lithium stearate, cesium stearate, sodium borohydride, lithium borohydride, potassium borohydride, cesium borohydride, sodium tetra phenylborate, sodium benzoate, potassium benzoate, lithium benzoate, disodium hydrogenphosphate, dipotassium hydrogenphosphate, dilithium hydrogenphosphate, disodium salt, dipotassium salt and dilithium salt of bisphenol A and sodium salt, potassium salt and lithium salt of phenol.

Specific examples of the alkaline earth metal compound include calcium hydroxide, barium hydroxide, strontium hydroxide, calcium hydrogencarbonate, barium hydrogencarbonate, strontium hydrogencarbonate, calcium carbonate, barium carbonate, strontium carbonate, calcium acetate, barium acetate, strontium acetate, calcium nitrate, barium nitrite, calcium cyanate, barium cyanate, strontium cyanate, calcium thiocyanate, barium thiocyanate, strontium thiocyanate, calcium stearate, barium stearate, strontium stearate, calcium benzoate, barium benzoate, strontium benzoate, calcium salt, barium salt and strontium salt of bisphenol A, and calcium salt, barium salt and strontium salt of phenol.

Further, compounds of elements coming under the group 14 of the periodic table, described in JP-A-7-268091, can be used as a catalyst or co-catalyst. The above elements coming under the group 14 of the periodic table refers to silicon, germanium and tin.

The alkali metal compound or alkaline earth metal compound as a catalyst is used preferably in such an amount ratio that the amount of an alkali metal element or alkaline earth metal element in the catalyst per mole of an aromatic diol compound (also referred to as "the aromatic dihydroxy compound") is 1 x 10⁻⁸ to 5 x 10⁻⁶ equivalent weight. The above amount ratio is more preferably such an amount ratio that the above amount on the same basis is 5 x 10⁻⁸ to 2 x 10⁻⁶ equivalent weight. Particularly, as an alkali metal compound, a lithium compound or a cesium compound is used in an amount of 50 to 100 %, preferably 60 to 100 %, based on the total alkali metal compounds.

When the amount of the alkali metal compound or alkaline earth metal compound is outside the above range, undesirably, there is caused a problem that a detrimental effect is caused on various physical properties of a polycarbonate obtained, or that the ester exchange reaction does not fully proceed so that no polycarbonate having a high molecular weight can be obtained.

The nitrogen-containing basic compound includes ammonium hydroxides such as tetramethylammonium hydroxide, tetraethylammonium hydroxide, tetrabutylammonium hydroxide, benzyltrimethylammonium hydroxide and hexadecyltrimethylammonium hydroxide; tertiary amines such as triethylamine, tributylamine, dimethylbenzylamine and hexadecyldimethylamine, and basic salts such as tetramethylammonium borohydride, tetrabutylammonium borohydride, tetrabutylammonium tetraphenylborate and tetramethylammonium tetraphenylborate. Of these, tetramethylammonium hydroxide is preferred.

Preferably, the above nitrogen-containing basic compound is used in such an amount ratio that the amount of ammonium nitrogen atoms of the nitrogen-containing basic compound is 1 x 10⁻⁵ to 5 x 10⁻³ equivalent weight per mole of the aromatic diol compound. The above amount ratio is more preferably such an amount ratio that the above amount on the same basis is 2 x 10⁻⁵ to 5 x 10⁻⁴ equivalent weight, and it is particularly preferably such an amount ratio that the above amount on the same basis is 5 x 10⁻⁵ to 5 x 10⁻⁴ equivalent weight.

When a polycarbonate is produced by a solution polymerization method, hydroxide of an alkali metal such as sodium hydroxide or an amine such as triethylamine or a quaternary ammonium compound is used for catching hydrogen chloride to be generated from hosgen.

The metal material used for a polymerization apparatus is not specially limited, and it can be selected from any material so long as it can be used for producing a polycarbonate. However, stainless steel is preferred. The above stainless steel refers to alloys made of iron, nickel and chromium as main components, and of these, an austenite stainless steel such as 18-8 stainless steel is preferred.

Specific examples thereof include SUS302, SUS304, SUS304L, SUS309, SUS309S, SUS310, SUS310S, SUS316, SUS316L, SUS317, SUS321 and SUS374. Of these, SUS304 and SUS316 are preferred since they are easily available and excellent in processability. Further, hard stainless steel such as hastelloy may be used. Further, while the whole internal surface of a reactor is not necessarily required to be made of stainless steel, the apparatus more preferably has a reactor of which the internal surface is made of stainless steel.

The internal surface of the apparatus may be buffed, calcined or pre-treated with a chemical such as a stainless treating agent as required, and prior to polymerization, treatment such as washing of the internal portion with a liquid such as water, phenol or ethylene glycol is preferably employed.

The production of a polycarbonate by a melt polymerization method can be carried out under conditions as employed for a known general method. Specifically, in a reaction at a first stage, an aromatic dihydroxy compound and a carbonate diester compound are allowed to react under reduced pressure at a temperature between 80°C and 250°C, preferably between 100°C and 230°C, more preferably between 120°C and 190°C, for 0.5 to 5 hours, preferably 1 to 4 hours, more preferably 1.5 to 3 hours. Then, the reaction temperature is increased with increasing the vacuum degree of the reaction system, to carry out the reaction of the aromatic dihydroxy compound and the carbonate diester compound, and finally, a polycondensation is carried out under a reduced pressure of 5 mmHg or less, preferably 1 mmHg or less at a temperature between 240°C and 320°C.

A polymer having a polymerization degree increased to a desired level by the above method generally has a hydroxy terminal. The hydroxy terminal is preferably blocked as desired.

The method for blocking the hydroxy terminal of a polymer is not specially limited, while it is preferred to employ a method in which the hydroxy terminal of a polymer is blocked with a terminal blocking agent disclosed in JP-A-10-36497 or a method in which the molar ratio of raw materials to be charged is controlled. Concerning specific methods such as type, amount, addition timing and adding method of the blocking agent, methods known per se can be employed.

A deactivator for the polymerization catalyst may be incorporated into the polycarbonate. Any known deactivator may be used as a deactivator for the catalyst. However, when the polycarbonate is produced by a melt polymerization method, a sulfonic acid compound such as an organic sulfonic acid salt, an organic sulfonic acid ester, an organic sulfonic acid anhydride or an organic sulfonic acid betain is preferred. Of these, sulfonic acid salt is particularly preferred, and above all, a quaternary phosphonium salt or quaternary ammonium salt of sulfonic acid is preferred.

The catalyst deactivator for a polycarbonate to be obtained by a melt polymerization is used in such an amount ratio that is 0.5 to 50 equivalent weights, preferably 0.5 to 10 equivalent weight, more preferably 0.8 to 5 equivalent weights per equivalent weight of the above polymerization catalyst selected from the alkali metal compounds and alkaline earth metal compounds. The above amount ratio generally corresponds to 0.01 to 500 ppm based on the polycarbonate.

When a polymer is produced by a solution polymerization method, preferably, the polymerization degree of the polymer is controlled with a polymerization terminator such as 4-t-butylphenol, phenol or p-cumylphenol after a desired polymerization degree is reached. There is no limitation to be imposed on an apparatus to be used, temperature conditions and timing.

The polycarbonate may contain a general heat stabilizer against heat. Preferably, a phosphate ester and/or a phosphite ester derivative are/is used.

Specific examples of the above stabilizer include arylalkyl phosphite such as phosphorous acid, bis(2,4-di-t-butylphenyl)pentaerythrityl diphosphite, bis(2,6-di-t-butyl-4-methylphenyl)pentaerythrityl diphosphite, bis(nonylphenyl)pentaerythrityl diphosphite and 2-ethylhexyldiphenyl phosphite; trialkyl phosphites such as triethyl phosphite, tributyl phosphite, trinonyl phosphite, trioctadecyl phosphite and distearylpentaerythrityl diphosphite; triaryl phosphites such as triphenyl phosphite, tricresyl phosphite, tetrakis(2,4-di-t-butylphenyl)-4,4'-bisphenylene phosphite, tris(2,4-di-t-butylphenyl) phosphite, tris(nonylphenyl) phosphite and tris(hydroxyphenyl) phosphite; arylalkyl phosphates such as phosphoric acid, pyrophosphoric acid, bis(2,4-di-t-butylphenyl)pentaerythrityl diphosphate, pentaerythrityl(2,4-di-t-butylphenyl) phosphate (2,4-di-t-butylphenyl)phosphite, pentaerythrityl(nonylphenyl) phosphate (nonylphenyl) phosphite, diphenyldecyl phosphate and 2-ethylhexyldiphenyl phosphate; trialkyl phosphates such as distearylpentaerythrityl diphosphate, pentaerythritylstearyl phosphate stearyl phosphite, trimethyl phosphate, tributyl phosphate, tridecyl phosphate, tris(2-chloroethyl) phosphate and tris(2,3-dichloropropyl) phosphate; and triaryl phosphates such as triphenyl phosphate, tris(2,4-di-t-butylphenyl) phosphate, tris(nonylphenyl) phosphate and tris(hydroxyphenyl) phosphate, while the stabilizer shall not be limited to these.

The above stabilizers may be used alone or in combination. The stabilizer may be added during polymerization or in the step of pelletization.

The polycarbonate may contain a release agent for improving the releasability thereof from a mold used for melt molding. The above release agent includes an olefin wax, an olefin wax containing a carboxyl group and/or carboxylic acid anhydride, a silicone oil, organopolysiloxane, a higher fatty acid ester of monohydric or polyhydric alcohol, paraffin wax and beeswax. The amount of the release agent per 100 parts by weight of the polycarbonate is preferably 0.01 to 5 % by weight.

The higher fatty acid ester as a release agent is preferably a partial ester or full ester of a monohydric or polyhydric alcohol having 1 to 20 carbon atoms and a saturated fatty acid having 10 to 30 carbon atoms. Specific examples of the above ester of a monohydric or polyhydric alcohol and a saturated fatty acid include ethylene glycol monoisopalmitate, propylene glycol dioleate, 1,4-butanediol diisopalmitate, 1,4-butenediol monostearate, glycerol monolaurate, glycerol monostearate, glycerol monobehenate, glycerol monoisostearate, glycerol monooleate, glycerol monolinolate, glycerol dipalmitate, glycerol distearate, glycerol diisostearate, glycerol dioleate, glycerol stearate isopalmitate, glycerol trimyristate, glycerol tristearate, glycerol triisostearate, trimethylolpropane monostearate, trimethylolpropane monobehenate, trimethylolpropane monooleate, trimethylolpropane diisostearate, trimethylolpropane tristearate, trimethylolpropane triisomyristate, trimethylolpropane trioleate, pentaerythritol monopalmitate, pentaerythritol diisopalmitate, pentaerythritol trioleate, pentaerythritol tetrastearate, pentaerythritol dioleate distearate and others such as sorbitan monostearate and sucrose diisostearate.

Of these, esters of glycerol, trimethylolpropane and pentaerythritol are preferred.

In addition, the following release agents may be used in combination as required.

That is, hydrocarbon release agents including natural and synthetic paraffin waxes, polyethylene wax and fluorocarbons; fatty acid release agents including higher fatty acids such as stearic acid and hydroxyfatty acids such as hydroxystearic acid; fatty acid amide release agents such as fatty acid amides such as ethylene bisstearylamide and alkylene fatty acid amides such as erucic acid amide, and alcohol release agents including aliphatic alcohols such as stearyl alcohol and cetyl alcohol, and polyhydric alcohols such as polyglycol, polyglycerol and trimethylolpropane. Besides, polysiloxanes may be used. These may be used alone or in combination. A timing, apparatus and method for addition of these additives are not specially limited.

The polycarbonate may contain inorganic and organic fillers for improving rigidity. The inorganic filler includes plate-shaped or particulate inorganic fillers such as talc, mica, glass flakes, glass beads, calcium carbonate and titanium oxide, fibrous fillers such as a glass fiber, a glass milled fiber, wollastonite, a carbon fiber, an aramid fiber, a metallic electrically conductive fiber, and organic particles such as crosslinked acryl particles and crosslinked silicone particles. The amount of these inorganic and organic fillers per 100 parts by weight of the polycarbonate is preferably 1 to 150 parts by weight, more preferably 3 to 100 parts by weight.

The above inorganic fillers may be surface-treated with a silane coupling agent or the like. This surface treatment gives good results such as the inhibition of decomposition of the polycarbonate.

The polycarbonate may contain other resin. Examples of the "other" resin include a polyamide resin, a polyimide resin, a polyether imide resin, a polyether resin, a polyurethane resin, a polyphenylene ether resin, a polyphenylene sulfide resin, a polysulfone resin, polyolefin resins such as polyethylene and polypropylene, a polyester resin, a noncrystalline polyarylate resin, a polystyrene resin, a polymethacrylate resin, a phenolic resin and an epoxy resin.

The above polyester resin refers to a polymer or copolymer obtained by polycondensation of an aromatic dicarboxylic acid or a reactive derivative thereof as a main composition and a diol or an ester derivative thereof as a main composition. Specific examples of the polyester resin include polyethylene terephthalate (PET), polypropylene terephthalate (PPT), polybutylene terephthalate (PBT), polyethylene-2,6-naphthalate (PEN), polybutylene-2,6-naphthalate (PBN), copolyesters such as polyethylene isophthalate/terephthalate and polybutylene terephthalate/isophthalate and mixtures of these.

While the mixing ratio of the polycarbonate and the polyester resin is not critical, the amount ratio of the polycarbonate is 5 to 95 % by weight, preferably 10 to 90 % by weight, and the amount ratio of the polyester resin is 95 to 5 % by weight, preferably 90 to 10 % by weight. When the amount ratio of the polycarbonate is less than 5 % by weight, undesirably, the impact resistance is insufficient, and when it is greater than 95 % by weight, undesirably, the chemical resistance is insufficient. For efficiently utilizing various properties of the polycarbonate, desirably, the amount ratio of the polyester resin is 50 % by weight or less, preferably 40 % by weight or less, more preferably 30 % by weight or less.

The above polystyrene resin refers to a polymer obtained by polymerization of a styrene monomer and optionally, at least one of other vinyl monomers and rubbery polymers copolymerizable therewith. The styrene monomer includes styrene, α-methylstyrene and p-methylstyrene. The "other" vinyl monomers include, for example, vinyl cyanide compounds such as acrylonitrile, (meth)acrylate esters such as methyl acrylate, a maleimide monomer, an α,β-unsaturated carboxylic acid and an anhydride thereof. The above rubbery polymers include, for example, polybutadiene, polyisoprene, a styrene-butadiene copolymer and an acrylonitrile-butadiene copolymer.

Specific examples of the above polystyrene resin preferably include polystyrene (PS), high-impact polystyrene (HIPS), an acrylonitrile-styrene copolymer (AS resin), a methyl methacrylate/butadiene/styrene copolymer (MBS resin), an acrylonitrile/butadiene/styrene copolymer (ABS resin), a styrene/IPN type rubber copolymer and mixtures of these, and an ABS resin is the most preferred. The above polystyrene resins may be used in the form of a mixture at least two polystyrene resins.

The mixing ratio of the polycarbonate and the polystyrene resin is not critical. When the total of (A) the polycarbonate and (B) the polystyrene resin is 100 % by weight, the amount of (A) the polycarbonate is 5 to 95 % by weight, preferably 10 to 90 % by weight, and the amount of (B) the polystyrene resin is 95 to 5 % by weight, preferably 90 to 10 % by weight. When the amount ratio of (A) the polycarbonate is less than 5 % by weight, undesirably, the impact resistance is insufficient, and when it is greater than 95 % by weight, undesirably, the moldability is insufficient. Further, for efficiently utilizing various properties of the polycarbonate, desirably, the polystyrene resin is used in an amount of 50 % by weight or less, preferably 40 % by weight or less.

For improving the impact resistance further, the polycarbonate may also contain a rubbery elastomer. Differing from the above polystyrene resin, the rubbery elastomer includes a graft copolymer formed by copolymerization of a rubber component having a glass transition temperature of 10°C or lower with one, two or more monomers selected from aromatic vinyls such as styrene and vinyl cyanide, (meth)acrylate esters such as methyl methacrylate, methacrylate ester and a vinyl compound copolymerizable therewith. There may be also used various elastomers known as thermoplastic elastomers having no crosslinked structre, such as polyurethane elastomer, polyester elastomer and polyether amide elastomer.

The above rubber component having a glass transition temperature of 10°C or lower is preferably a rubbery elastomer containing a butadiene rubber, a butadiene-acryl composite rubber, an acryl rubber or an acryl-silicon composite rubber.

The above rubbery elastomer can be easily commercially available. The rubbery elastomer containing mainly a butadiene rubber or an butadiene-acryl composite rubber as a rubber component having a glass transition temperature of 10°C or lower includes Kane Ace B series supplied by Kanegafuchi Chemical Ind. Co., Ltd., Metablen® C series supplied by Mitsubishi Rayon Co., Ltd., and EXL series, HIA series, BTA series and KCA series supplied by Kureha Chemical Ind. Co., Ltd., and the rubbery elastomer containing mainly an acryl-silicon composite rubber as a rubber component having a glass transition temperature of 10°C or lower includes Metablen® S-2001 and RK-200 supplied by Mitsubishi Rayon Co., Ltd.

The amount of the above rubbery elastomer per 100 parts by weight of the polycarbonate is preferably 3 to 40 parts by weight.

For incorporating the above various components into the polycarbonate, any method can be employed. For example, there can be properly employed a method in which the components are mixed with the polycarbonate with a tumbler, a V-type blender, a super mixer, a Nauta mixer, a Banbury mixer, a kneading role or an extruder. The thus-obtained polycarbonate composition is formed into a sheet by a melt extrusion method directly or after pelletized once with a melt-extruder, or a molded article excellent in durability and stability can be obtained therefrom by an injection molding method.

The pelletization of the above polycarbonate itself, the resin composition composed mainly of the polycarbonate and the pellets having a smaller amount of adhering foreign matter will be explained below.

In the present invention, the pellets have a form having a major diameter of 2.0 to 5.0 mm, a minor diameter of 1.5 to 4.0 mm and a length of 2.0 to 5.0 mm, and preferably, the pellets have a form having a major diameter of 2.5 to 4.5 mm, a minor diameter of 2.0 to 3.5 mm and a length of 2.0 to 4.5 mm. Particularly preferably, the pellets have a form having a major diameter of 2.7 to 4.2 mm, a minor diameter of 2.0 to 3.2 mm and a length of 2.5 to 4.0 mm. The pellets may have a cross-sectional form of any one of a circle, an ellipsoid or a rectangle. The cross-sectional form may be also any variant of these.

For establishing a method of producing a high-class polycarbonate pellets, the present inventors have made studies in various ways as to what prevents the amount of foreign matter adhering to obtained pellets from decreasing to a satisfactory level in spite of managing water used and the amount of foreign matter in ambient atmosphere.

As a result, it has been found that pellets obtained by pelletization are liable to adsorb foreign matter such as soil and dirt in air and that foreign matter in atmosphere is concentrated on pellet surfaces.

It has been found that the above concentration function is closely related to the potential of an electrostatic charge and that the concentration function can be slackened by controlling the potential of an electrostatic charge on surfaces of pellets after pelletization to be a specific value or lower.

According to the present invention, there is provided a method for maintaining polycarbonate pellets, which comprises maintaining the potential of electrostatic charge of polycarbonate pellets having a smaller amount of adhering foreign matter, that is, polycarbonate (A) having adhering foreign matter having a particle diameter of 0.5 to 10 µm in an amount of 10,000 pieces/g or less in a range of ±10 kV, preferably ±7 kV, in steps up to the step of melting the polycarbonate pellets (A) for producing a polycarbonate molded article. In the pellets maintained in the present invention, the number of the above foreign matter is preferably 5,000 pieces/g or less, particularly preferably 4,000 pieces/g or less.

The above polycarbonate pellets (A) having a smaller amount of adhering foreign matter can be obtained (1) by controlling the potential of an electrostatic charge in a range which does not exceed ±10 kV and, preferably, further maintaining them in a clean atmosphere in the step of pelletization as will be described below or (2) by carrying out "dusting treatment" thereof as will be described below.

The above potential of an electrostatic charge refers to a potential of an electrostatic charge generated on pellet surfaces, and can be measured with a usual static electricity meter.

The potential of an electrostatic charge in the step of pelletization is measured as a potential of an electrostatic charge generated on surfaces of pellets obtained by pelletization. In the present invention, the treatment for controlling the potential of an electrostatic charge on pellets in the step of pelletization to bring the potential into the range of ±10 kV not always limited to treatment after completion of the pelletization, and preferably, the treatment is also carried out during the pelletization.

The present invention has one of its features in that treatment (diselectrification) for controlling the potential of an electrostatic charge on pellets to bring it into the range of ±10 kV is carried out. The potential of an electrostatic charge on the pellets is controlled to be preferably in the range of ±7 kV, more preferably in the range of ±5 kV.

In contrast, when no treatment for controlling the potential of an electrostatic charge on pellets to decrease into the above range is carried out, the potential of an electrostatic charge on the pellets greatly increases during pelletization, and the pellets adsorb dust in atmosphere. The dust adsorbed as above is one of causes of foreign matter in a polycarbonate molded article.

Foreign matter which adheres to the polycarbonate pellets in the pelletization step is intensely liable to adhere strongly as compared with foreign matter which adheres in other steps, and decreasing the amount of adhering foreign matter by controlling the potential of an electrostatic charge in this step is an important technical point. Moreover, by controlling the potential of an electrostatic charge on the pellets in a step to follow, it is possible to control the adsorption of foreign matter such as soil and dirt in air that is an atmosphere in which the pellets are present to be low, and as a result, clean pellets can be obtained.

While the method for bringing the potential of an electrostatic charge on pellet surfaces into a low level (diselectrification treatment) is not specially limited, it is preferred to employ a method using an apparatus for removing an electrostatic charge, a method in which pellets are passed through water, a method in which water is sprayed, a method in which pellets are brought into contact with a current of gas having a charge opposite to the charge on pellet surfaces or a method using means of grounding (earthing) through a conductive material. The conductive material that comes into contact with pellets is preferably made of a metal or an alloy that does not easily rust such as stainless steel or a material having a surface treated to have anticorrosive properties and conductivity.

While the method for solidifying and pelletizing a polycarbonate in a molten state may be any known method, there is employed, for example, a method in which the polycarbonate in a molten state is extruded through a die in the form of strands and the strands are pelletized with a chip cutter.

In the step of extruding the polycarbonate in a molten state to obtain strands and pelletizing the strands, the thus-obtained pellets are liable to adsorb soil and dirt, so that working is preferably carried out in a dust-free space called a clean room where soil and dirt are prevented.

Preferably, an apparatus, equipment and tools such as a chip cutter and a container for receiving pellets to be used for pelletizing are cleaned of foreign matter such as soil and dirt before use, or those which do not easily generate soil and dirt are used.

The atmosphere in the step of pelletizing the polycarbonate and steps to come thereafter preferably satisfies Class 1,000,000 or less in US Federal Standard 209E, more preferably satisfies Class 100,000 or less, still more preferably satisfies Class 10,000 or less. The value of each class means the following. For example, Class 1,000,000 means that the number of dust having a size of 0.5 µm or greater in one cubic feet of the atmosphere is 1,000,000 or less. Further, "Class 100,000 or less" and "Class 10,000 or less" mean that the number of dust having a size of 0.3 µm or greater in the atmosphere is 100,000 or less and 10,000 or less, respectively.

In the present invention, that "the atmosphere in which the pellets are present satisfies Class 1,000,000 or less" does not necessarily mean that the atmosphere in which the pellets are present constantly satisfies Class 1,000,000 or less.

In the pelletizing step, it is useful that "the atmosphere in which the pellets are present satisfies Class 1,000,000 or less", since the step of pelletization is a step where an electrostatic charge is liable to be accumulated on the pellets. In the pelletization step, the order of cooling, solidification and cutting is not specially limited, and these procedures may be carried in this order, or these operations may be carried out simultaneously, or cooling and solidification may be carried out after cutting.

While it is useful that "the atmosphere in which the pellets are present satisfies Class 1,000,000 or less" in the other steps as well, it is not always useful that "the atmosphere in which the pellets are present satisfies Class 1,000,000 or less" only in the other steps excluding the pelletization step.

While the atmosphere in the step of pelletizing the polycarbonate and the atmosphere in the other step of processing the pellets are generally air, it is sometimes an atmosphere of argon, nitrogen, or the like. In some cases, a gas containing water is also useful for preventing the accumulation of electrostaic charge during transfer, transportation and storage of the pellets.

Specific examples of the step of pelletizing the polycarbonate include not only the step of pelletizing a solid having the form of a strand or a plate with a pelletizing apparatus such as a cutter, but also the step of extruding a molten polycarbonate into water and pelletizing it in water with an in-water cutter together concurrently with its solidification.

In the above case, weakly acidic water is preferred in view of stability of the polycarbonate, durability thereof against hydrolysis in particular. In terms of a pH, it is preferred to use water having a pH between 5.0 and 6.8, and it is more preferred to use water having a pH between 5.5 and 6.8.

An acidic substance to be contained in the above water is not specially limited, and carbonic acid; carboxylic acids such as acetic acid, citric acid and malic acid and phosphoric-acid-based substances such as phospholic acid and phosphorous acid are preferred. Carbonic acid is particularly preferred. The content of the acidic substance is not critical so long as the pH value is in the above range.

Further, preferably, the content of foreign matter in the water is small, and the number of foreign matter having a particle diameter of 0.5 to 10 µm in the water is preferably 100,000 pieces/g or less, more preferably 70,000 pieces/g or less, still more preferably 50,000 pieces/g or less.

Further, the number of foreign matter having a particle diameter of 10 µm or more in the water is preferably 10 pieces/g or less. The number of such foreign matter having a relatively large particle diameter is preferably small as compared with the above fine foreign matter, and it is more preferably 7 pieces/g or less, still more preferably 5 pieces/g or less.

The foreign matter in the water is decreased by a method in which water is filtered or a method in which water is purified by distillation. It is more preferred to use the method in which water is filtered to remove the foreign matter. Further, treatment such as ionexchange may be carried out as required.

The number of foreign matter in the water can be preferably counted by a HIAC Royco method and a measuring method using a laser sensor.

An electrostatic charge accumulated on the pellets during the pelletization step can be removed in the pelletization step and/or step(s) to come thereafter.

When the step of pelletizing a solid having the form such as strands or plates with a pelletizing apparatus such as a cutter is employed and when it is desired to low extremely number of foreign matter or the atmosphere in the pelletization step is not necessarily clean, it is preferred to carry out diselectrification as soon as possible after an electrostatic charge is generated or during the generation of an electrostatic charge. That is because strands, etc., generate a high level of electrostatic charge when the strands are cut in the form of pellets. Specifically, the diselectrification is preferably carried out during the pelletization or immediately after the pelletization. Further, the cutter itself is preferably diselectrifiable.

When the pelletization is carried out in a sufficiently clean atmosphere, the adsorption of dust can be prevented in some cases even if the diselectrification is not immediately carried out. However, the pellets are liable to generate an electrostatic charge in steps of following pellets, that is, during the transfer or transportation thereof.

Further, when an in-water cutter is used, an electrostatic charge is not easily accumulated during cutting, the diselectrification is not required immediately after the cutting in some case. In this case, however, the pellets are also liable to generate an electrostatic charge during the transfer or drying thereof.

In the above case, it is preferred to carry out the diselectrification not in the pelletization step but in step(s) to come thereafter. When the pellets are present in an atmosphere having a low cleanness, it is preferred to carry out the diselectrification before the pellets are brought into such an atmosphere.

It can be experimentally determined when the diselectrification is carried out in the pelletization step and/or step(s) to come thereafter and how many times it is carried out.

A molten polycarbonate to be pelletized may be any one of a polycarbonate obtained directly from a polymerization step, a polycarbonate that is once pelletized and re-melted, a polycarbonate prepared by recycling a polycarbonate molded article and a blend containing a polycarbonate and other resin.

Further, various additive may be added to the polycarbonate that is in a molten state, a substance having a low molecular weight may be removed from the polycarbonate by degassing under reduced pressure, or the polycarbonate may be chemically modified by a terminal modification reaction.

The polycarbonate in the above molten state is preferably handled with a twin-screw extruder, and there may be optionally employed a step in which the polycarbonate is quantitatively extruded with a gear pump or the polycarbonate is filtered.

After the potential electrostatic charge of the pellets obtained by the pelletization is controlled to be in the range of ±10 kV, an electrostatic charge may be also accumulated on the pellets in step(s) to come thereafter. In such a case, if the atmosphere in which the pellets are present contains a large amount of soil and dirt, the pellets adsorb the soil and dirt, so that the amount of foreign matter adhering to the polycarbonate pellets increases.

That is, the atmosphere in which the pellets are present is not always sufficiently free of soil and dirt, the pellets causes friction during the transfer and transportation thereof, and the potential of an electrostatic charge on the pellets increases in some cases. Under such circumstances, the pellets adsorb dust in some cases.

That is, even after dust is controlled or removed by various method including the above diselectrification, the pellets sometimes adsorb dust with an increase in potential of electrostatic charge.

The diselectrification is effective even when dust is adsorbed as described above. And, the potential of an electrostatic charge after the diselectrification can be the same value as that in the pelletization.

In the above case, as is already described, there can be employed a method using an apparatus for removing an electrostatic charge, a method in which pellets are brought into contact with a current of gas having a charge opposite to the charge on pellet surfaces, a method using means of grounding (earthing) through a conductive material or a method in which the pellets are washed or showered with clean water.

The diselectrification can be carried out one or a plurality of times before, during or after treatment for removal of dust. The timing of the treatment can be easily experimentally determined.

The thus-diselectrified pellets do not easily adsorb dust regardless of whether the atmosphere is clean or not clean, and ultimately, the number of foreign matter in a product as an end product can be decreased.

The pellets having a smaller amount of adhering dust and having a potential of electrostatic charge in the range of ±10 kV do not easily adsorb dust regardless of whether the atmosphere is clean or not clean, and ultimately, the number of foreign matter in a product as an end product can be decreased. However, if the pellets once have a potential of an electrostatic charge outside the range of ±10 kV in a non-dust-free atmosphere before the potential of electrostatic charge of the pellets comes to be in the range of ±10 kV, the pellets adsorb dust during such an occasion, so that the effect produced by maintaining the potential of the electrostatic charge in the range of ±10 kV may not obtained in some cases.

For example, when the strand is pelletized without diselectrification and allowed to stand, the pellets sometimes has a potential of an electrostatic charge outside the range of ±10 kV, and in this case, the pellets adsorb dust, so that the effect is hardly produced even if the potential of the electrostatic charge is thereafter maintained in the range of ±10 kV.

In such a case, dusting treatment is carried out to remove dust that once adheres, and the potential of the electrostatic charge of the pellets is brought within the range of ±10 kV, whereby the adsorption of dust can be finally controlled to be low. When the potential of the electrostatic charge is already within the range of ±10 kV by discharge, the diselectrification portion of the "dusting treatment" referred to in the present description is already completed, so that it is sometimes sufficient to carry out a dust-removing portion of the "dusting treatment".

The above "dusting treatment" may be carried out by any method. For example, it includes removal of dust adhering to pellet surfaces and removal of soil and dirt in an atmosphere, including (a) means of bringing the pellets into contact with a current of a gas having an opposite charge, (b) means of removing a charge with grounding through a conductive material and then bringing pellets into contact with a clean gas current, (c) means of bringing diselectrified pellets into a clean gas current with vibrating the pellets and (d) means of using for washing pellets with clean water. It can also include diselectrification caused by natural discharge. In other words, with regard to pellets that require no diselectrification, an embodiment including no procedures for the diselectrification is also included in the dusting treatment in the present invention.

"Non-dust-free atmosphere" refers to an atmosphere or water that is not clean. Specifically, it means that an atmosphere where the pellets are present comes under Class of over 1,000,000, and it also means that the number of foreign matter having a particle diameter of 0.5 to 10 µm in water with which the polycarbonate or the pellets come in contact exceeds 100,000 pieces/g and that the number of foreign matter having a particle diameter of 10 µm or more exceeds 10 pieces/g.

That is, the polycarbonate pellets of the present invention are pellets after pelletization, and they are polycarbonate pellets (a) which have a potential of an electrostatic charge in the range of ±10 kV and whose potential of an electrostatic charge substantially has never been outside the range of ±10 kV in a non-dust-free atmosphere in the past or polycarbonate pellets (b) whose potential of an electrostatic charge has been outside the range of ±10 kV in a non-dust-free atmosphere, which have been subjected to the dusting treatment after said stage and whose potential of an electrostatic charge substantially has never been outside the range of ±10 kV in a non-dust-free atmosphere in the past.

In the pellets thus-treated for the above dusting, the number of foreign matter having a particle diameter of 0.5 to 10 µm is 10,000 pieces/g or less, preferably 5,000 pieces/g or less, particularly preferably 4,000 pieces/g or less.

When the above polycarbonate pellets are present in an atmosphere which satisfies Class 1,000,000 or less, preferably Class 100,000 or less, there is produced a large effect on decreasing the amount of adhering foreign matter.

In the present invention, the pellets that have been subjected to the dusting treatment are maintained such that the potential of an electrostatic charge of the pellets is in the range of ±10 kV in steps up to the step of melting the pellets for producing a polycarbonate molded article. Specifically, it is required to maintain the potential of the electrostatic charge of the pellets in the above range in the steps of storage, transportation and transfer or molding after the pelletization. More specifically, in a dryer for the pellets, a classifier such as a sieve, a container, a hopper, a tubing and a blower, the potential of the electrostatic charge of the pellets is maintained in the above range, and desirably, the atmosphere in which these are present satisfies the above Class.

In the pellets to which the maintaining method of the present invention is applied, the amount of foreign matter adhering to the surfaces thereof is as small as possible, so that such pellets are suitable for obtaining a high-class molded articles and particularly, optical disk substrates.

The high-class polycarbonate pellets according to the present invention can be favorably used in the fields of optical recording materials for compact disks such as CD, CD-R and CD-RW, magneto-optical disks (MO) and digital versatile disks (DVD-ROM, DVD-Video, DVD-Audio, DVD-R and DVD-RAM).

Further, the above polycarbonate pellets may be used in fields other than the fields of optical disks, including the fields of various molded articles such as injection molding, blow molding, extrusion, injection blow molding, rotary molding, compression molding and the fields of sheets and films, although no limitation is imposed thereon. For use in these fields, the polycarbonate obtained according to the present invention may be used alone, or a blend thereof with other polymer may be used. Processes such as hard coating or laminating may be also favorably used depending upon use.

Specific examples of the molded articles include optical communication media such as an optical fiber; optical parts such as an automobile headlamp lens and a camera lens; optical machine and equipment parts such as sairen and light cover and an illuminating light cover; substitutes for window glass of cars such as a train and an automobile; substitutes for window glass of a house; lighting parts for a sunroof and a roof of a green room; lenses for a goggle, dark glasses and eyeglasses; cases for office-use machines such as a copying machine, a facsimile machine and a personal computer; electronic parts such as a connector and an IC tray; protective tools such as a helmet, a protector and a protective mask; tableware such as a tray; and medical supplies such as an artificial dialyzer case and a artificial tooth, although the molded articles are not limited to these.

### Effect of the Invention

According to the present invention, the adsorption of foreign matter such as soil and dirt is prevented, and there can be obtained a clean polycarbonate pellet that can be suitably used in the field of optical disks, and the like.

Polycarbonate pellets produced by the method disclosed by the present invention are useful particularly in the field of optical materials, and the polycarbonate pellets are particularly preferred for use in the field of optical disks among the optical materials and are favorably used for recording materials having low error rates.

### Brief Description of Drawings

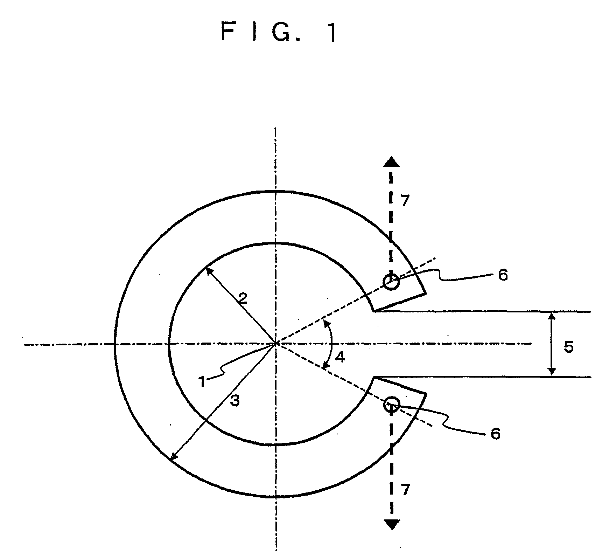

Fig. 1 is front view of a so-called C type sample used for evaluation of durability against fatigue under humidity and heat. The sample has a thickness of 3 mm. A tool of a testing machine is inserted through a hole portion indicated by reference numeral 6, and a test is carried out while exerting a predetermined load in vertical directions shown by reference numeral 7. Explanation of reference numerals
1. Center of dual circle having a C-type form.
2. Radius (20 mm) of inner circle of the dual circle.
3. Radius (30 mm) of outer circle of the dual circle.
4. Central angle (60°) indicating positions of hole to which a tool is to be fitted.
5. Gap (13 mm) between end faces of a sample.
6. Hole to which a tool is to be fitted (circle having a diameter of 4 mm, located in the center of a sample width).
7. Direction of load to be imposed on a smaple during a fatigue test.

### Examples

The present invention will be explained more in detail with reference of Examples hereinafter, while the present invention shall not be limited by these Examples

In the present invention, physical properties were measrued by the following methods.
(a) Intrinsic viscosity [η]
   Measured in methyclene chloride at 20°C with an Ubbellohde viscometer.
(b) Measurement for an amount of foreign matter adhering to polycarbonate pellets
   Polycarbonate pellets were measured for numbers of foreign matter before and after cleaning as follows, and a difference between the numbers was taken as the number of adhering foreign matter.
   (i) Preparation of washed sample
      Approximately 100 g of polycarbonate pellets were accurately weighed in a clean booth coming under Class 100,000. Then, the pellets were stirred and washed in approximately 300 ml of an electronics-industry-use high-purity isopropyl alcohol in a hermetically closed container at room temperature for 30 mintues. The isopropyl alcohol used or the washing was filtered off. This procedure was repeated three times, and the resultant polycarbonate pellets were used as a washed sample.
   (ii) Measurement for foreign matter (number of foreign matter having a particle diameter of 10 µm or greater)
      1 Liter of dichloromethane was added to 100 g of the polycarbonate pellets to obtain a polymer solution. The solution was filtered through a filter having a 10 µm pore size, supplied by Millipore. Remaining components soluble in dichloromethane were washed off after the filtration, and insoluble components (foreign matter) were separated on the filter. The insoluble components (foreign matter) were observed through a microscope having a magnification of 40 times and counted. A number obtained by blank test when no polymer was added was taken as an amount of foreign matter included in the operation of this measurement and deducted as a blank valuen for determining. A washed sample and an unwashed sample of polycarbonate pellets were measured, and a difference between obtained numbers was taken as the number of adhering foreign matter.
   (iii) Measurement for foreign matter (number of foreign matter having a particle diameter of 0.5 to 10 µm or greater)
      Measured with a liquid automatic fine particle count meter Series 8000 (Micro Count-05 by HIAC/Royco). For an amount of foreign matter in polycarbonate pellets, dichloromethane was used as a solvent, and a sample having a polymer concentration 1 % (w/v) was prepared and measured. The number of foreign matter having a particle diameter of 0.5 to 10 µm was shown in terms of pieces/g. A washed sample and an unwashed sample of polycarbonate pellets were measured, and a difference between obtained numbers was taken as the number of adhering foreign matter.
(c) Durability against fatigue under humidity and heat A so-called C type measurement sample as shown in Fig. 1 was subjected to a fatigue tester (Shimadzu Servo Pulser EHF-EC5 type, supplied by Shimadzu Corporation) in an atmosphere of 80°C and 90 %RH under conditions of sine waves having a frequency of 1 Hz and a maximum load of 2 kg and measured for the number of times until the sample was broken.
   (iv) Measurement for potential of electrostatic charge on pellet surface

   A pellet was measured for a potential of an electrostatic charge on a pellet surface with an electrostatic charge meter Statiron® TH type potentiometer supplied by Shishido Denki K.K.

### Example 1

There was set an apparatus using KTX-30 supplied by Kobe Steel Ltd. as a twin-screw extruder for melting a polymer, using MWF CC92-0714-0 type feeder made by Kubota K.K. and having a filter portion connected on a polymer outlet side of the extruder through a tubing. A metal non-woven fabric (Naslon, supplied by Nippon Seisen K.K., filtering accuracy 5 µm) was used as a filter. Polycarbonate pellets (trade name: Panlite AD-5503) made by Teijin Chemicals Ltd. were supplied thereto at a feed rate of 15 kg/hour, and the polymer was melt-extruded at a twin-screw extruder heater temperature of 270°C at a filter portion temperature of 270°C, to form strands in water, and the strands were pelletized with a chip cutter (SCF-100 made by Isuzu Kakoki K.K.).

The above pellets formed by the pelletization were brought into contact with an electrostatic charge removing apparatus to decrease a potential electrostatic charge on surfaces. Water having a pH of 7.2 was used as cooling water for forming the strands, and the steps of from melting the polymer to the pelletization were carried out in a normal room different from a clean room. Table shows a potential of a surfac electrostatic charge and the number of adhering foreign matter of the obtained pellets.

### Comparative Example 1

Example 1 was repeated except that the pellets were not brought into contact with the electrostatic charge removing apparatus.

### Example 2

Pelletization was carried out in the same manner as in Example 1 except that the pelletization was carried out in a clean booth in which air came under Class 100,000.

### Example 3

Pelletization was carried out in the same manner as in Example 2 except that water having a pH adjusted to 6.4 by adding dry ice, containing 1,210 pieces/g of foreign matter having a particle diameter of 0.5 to 10 µm and 1 piece/100 g of foreign matter having a particle diameter of 10 µm or greater was used to form strands.

### Example 4

137 parts by weight of bisphenol A supplied by Shin-Nittetsu Kagaku K.K. and 135 parts by weight of diphenyl carbonate prepared by the method described on page 45 of Plastic Zairyo Koza 17 "Polycarbonate" written by Tachikawa and Itajiri and issued by Nikkan Kogyo Shinbunsha were charged, a sodium salt of phenol was added in an amount of 1.0 x 10⁻⁶ mol per mole of the bisphenol A as a catalyst, and tetramethylammonium acetate was added in an amount of 1.0 x 10⁻⁴ mol per mole of the bisphenol A. And, polymerization was initiated.

After the mixture was melted at 200°C, a pressure was decreased to 100 mmHg to carry out a reaction for 1 hour with distilling off a formed aromatic hydroxy compound. Further, the reaction was continued at 220°C at 30 mmHg for 30 minutes, at 240°C at 30 mmHg for 30 minutes and at 260°C at 10 mmHg for 30 minutes.

Then, the reaction was further carried out at 260°C at 1.0 mmHg for 2 hours, and when the polymer came to have an intrinsic viscosity [η] of approximately 0.35, p-toluenesulfonic acid tetrabutylphosphonium salt in an amount of 2 equivalent weight per mole of sodium of the polymerization catalyst was added as a deactivator for the catalyst to terminate the reaction.

The polymer was ejected through the outlet of the apparatus to which the filter portion was conntected through the tubing on the polymer outlet side, and pelletized. As a filter, a metal non-woven fabric (Naslon, supplied by Nippon Seisen K.K., filtering accuracy 5 µm) was used. The pelletization used the same water as that used in Example 1, and the steps of from the ejection to the pelletization were carried out in a normal room. In this case, the electrostatic charge removing apparatus was brought into contact with surfaces of obtained chips.

### Comparative Example 2

Example 4 was repeated except that the electrostatic charge removing apparatus was not used.

### Example 5-1

Example 4 was repeated except that water prepared in the same manner as in Example 3 was used as water for pelletization, that the steps of from ejection to pelletization were carried out in a clean booth of Class 100,000 to 1,000,000 and that pellets were then taken out into a normal room different from the clean room.

### Example 5-2

Polymerization was carried out in the same manner as in Example 4 except that the catalyst was replaced with a sodium salt of phenol in an amount of 0.25 x 10⁻⁶ mol per mole of the bisphenol A and a lithium salt of phenol in an amount of 0.75 x 10⁻⁶ mol per mole of the bisphenol A. Then, pellets were prepared in the same manner as in Example 5-1.

### Example 5-3

Polymerization was carried out in the same manner as in Example 4 except that the catalyst was replaced with a sodium salt of phenol in an amount of 0.5 x 10⁻⁶ mol per mole of the bisphenol A and cesium hydroxide in an amount of 0.5 x 10⁻⁶ mol per mole of the bisphenol A. Then, pellets were prepared in the same manner as in Example 5-1.

### Example 6

Pellets were obtained in the same manner as in Example 1 excpet that pelletization was carried out in a clean booth with air coming under Class 100,000 to 1,000,000.

Then, the pellets were transferred to a hopper by air-transportation with keeping the pellets in contact with non-ionized air. In this case, the pellets had an electrostatic charge potential of -7 kV. Then, the pellets were freely dropped to transfer them to a lorry. In this case, for preventing the adsorption of foreign matter in the course of from a hopper to the lorry, the pellets were diselectrified with an electrostatic charge removing apparatus.

### Comparative Example 3

In Example 6, pellets were not brought into contact with the electrostatic charge removing apparatus in the pelletization. In this case, the pellets obtained had a surface electrostatic charge potential of -12 kV. Pellets were obtained from the above pellets in the same manner as in Example 6.

### Example 7

100 Grams of the pellets obtained in Comparative Example 1 were placed into 500 ml of the same water as the water used in Example 3. Immediately thereafter, the pellets were transferred into a clean booth with air coming under Class 100,000 to 1,000,000, and water on the pellet surfaces was blow off and dried with clean air. The pellets were measured for a surface electrostatic charge potential. The pellets had a surface electrostatic charge potential of -4 kV, and the number of foreign matter having a particle diameter of 0.5 to 10 µm in the pellets was 6,850 pieces/g.

Then, the pellets obtained under the above same condition were transferred to a hopper by air-transportation with keeping the pellets in contact with non-ionized air. In this case, the pellets had an electrostatic charge potential of -7 kV. Then, the pellets were freely dropped to transfer them to a lorry. In this case, for preventing the adsorption of foreign matter in the course of from a hopper to the lorry, the pellets were diselectrified with an electrostatic charge removing apparatus.

### Example 8 and Comparative Examples 4 and 5

The following experiment was carried out for grasping influences of potentials of surface electrostatic charges.

The pellets obtained in Example 3 were placed in a rotary drum type blender filled with clear air coming under Class 100,000 to 1,000,000, and the blender was operated for 2 hours. Then, the pellets were taken out into a clean booth with air coming under Class 100,000 to 1,000,000 and classified into samples weighing approximately 100 g each, and the samples were left to decrease the potentials of surface electrostatic charges by discharge.

Then, the samples were measured for potentials of surface electrostatic charges at time intervals, and immediately after the measurement, the pellets were placed in normal places outdoors and left for 1 hour each, transferred into a clean booth with air coming under Class 100,000 to 1,000,000. Then, foreign matter in the pellets was counted.

The number of foreign matter in each was as follows.

The number of foreign matter having a particle diameter of 0.5 to 10 µm in pellets having a surface electrostatic charge potential of -25 kV in the sample was 22,460 pieces/g (Comparative Example 4).

The number of foreign matter having a particle diameter of 0.5 to 10 µm in pellets having a surface electrostatic charge potential of -15 kV in the sample was 16,870 pieces/g (Comparative Example 5).

The number of foreign matter having a particle diameter of 0.5 to 10 µm in pellets having a surface electrostatic charge potential of -5 kV in the sample was 7,910 pieces/g.

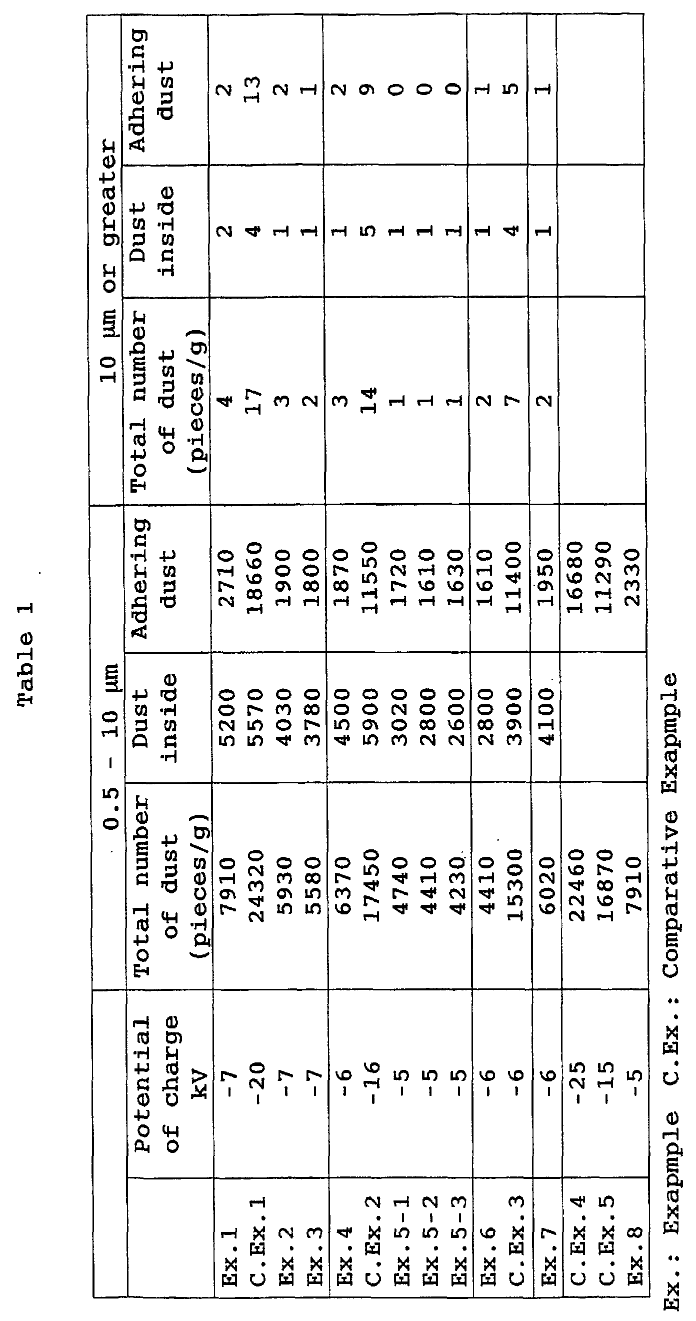

### Examples 9-1 to 9-3 and Comparative Example 6 (Molding and valuation of optical disk substrate)

For molding each of the polycarbonate pellets used in Example 1 and Comparative Example 1 into substrates, an injection molding machine (model: MO40D3H) supplied by Nissei Jushi Kogyo K.K. was used, and a mold and a stamper for a phase-chage type optical recording medium substrate having memories of 2.6 GB (disk diameter of 120 mm, thickness of 0.6 mm) were used. The mold temperature was set at 123°C in a movable portion and 128°C in a fixed portion. Fruther, a cutter and a sprue were temperature-set at 60°C. A resin temperature was set at 380°C as a cylinder temperature. The polycarbonate pellets were charged into a mold cavity at an injection rate of 250 mm/sec and molded to produce optical disk substrates.

### Test on deterioration under temperature and humidity

For evaluating an optical disk substrate for reliability under an environment of sever-temperatures and humidities for a long time, each optical disk substrate was held at a temperature of 80°C at a relative humidity of 85 %RH for 1,000 hours and then observed through a polarizing microscope to count white spots that occurred and had a diameter of 20 µm or greater. The above procedures were conducted with regard to 25 optical disk substrates (diameter of 120 mm), and counted values were averaged.

When the average number of the white spots was 1.5 to 2 (pieces/disk), the substrates were evaluared to be OK, when it exceeded 2, the substrates were evaluated to be NG, when it was from over 1.0 up to 1.5, the substrates were evaluated to be GOOD, and when it was 1.0 or less, the substrates were evaluated to be Excellent.

The number of the white spots that occurred in Example 9-1 was an average of 0.3 piece, and the number of the white spots that occurred in Comparative Example 6 was an average of 3.6 pieces. In addition, the polycarbonate pellets in Examples 5-2 and 5-3 were used to carry out the above test, and the numbers of white spots were 0.2 (Example 9-2) and 0.1 (Example 9-3). Example 10 and Comparative Example 7 (Preparation and evaluation of compounding pellets)

In Example 4 and Comparative Example 2, polymerization was proceeded with until polymers had an intrinsic viscosity [η] of 0.50, and while 0.003 part by weight, per 100 parts by weight of the polycarbonate, of tris(2,4-di-t-butylphenyl) phosphite and 0.05 part by weight, per 100 parts by weight of the polycarbonate, of trimethyl phosphate were added, pelletization was carried out in the same manner as in Example 4 and Comparative Example 2 (to be called P10 and C5). These pellets were measured for numbers of adhering foreign matter.

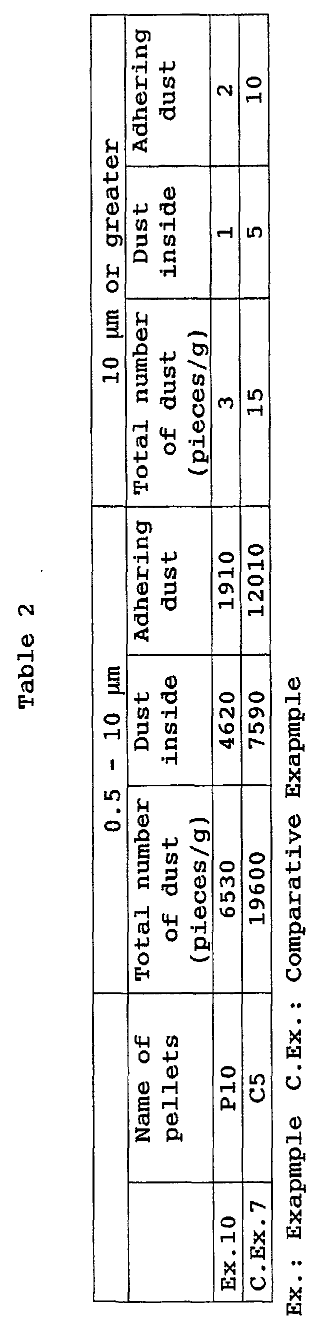

### Examples 11 to 14 and Comparative Examples 8 to 11

### (Preparation and evaluation of compounds)

### (1) Preparation of compounded pellets

The pellets in each of Example 10 and Comparative Example 7 were independently pelletized together with predetermined amount ratios of various polymers with a twin-screw extruder having a 30 mmφ vent (KTX-30, supplied by Kobe Steel Ltd.) at a cylinder temperature of 260°C while degassing at a vacuume degree of a vent pressure of 1.33 kPa (10 mmHg) under conditions of Example 4 and Comparative Example 2.

### (2) Preparation of molded article

The pellets obtained in (1) were dried at 120°C for 5 hours and then molded into a C type molded piece with an injection molding machine (SG 150U, supplied by Sumitomo Heavy Industries, Ltd.) at a cylinder temperature of 260°C at a mold temperature of 70°C.

### (3) Evaluation of molded article

### (a fatigue test under humidity and heat)

The C type molded pieces prepared in above (2) were subjected to a fatigue test under humidity and heat in an atmosphere of 80°C and 90 %RH with a Shimadzu Servo Pulser EHT-EC 5 g type fatigue tester supplied by Shimadzu Corporation under conditions of a sine wave frequency of 1 Hz and a maximum load of 2 kg, and the C type molded pieces were evaluated for numbers of times until the test pieces were broken,

Table summarizes the results.

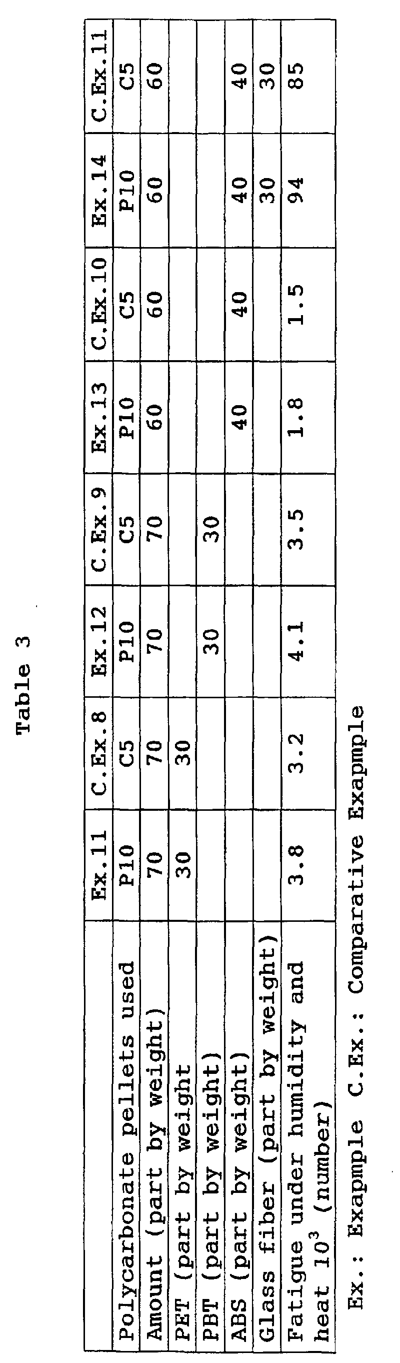

PET (Polyethylene terephthalate, TR-8580 supplied by Teijin Ltd., intrinsic viscosity 0.8)

PBT (Polybutylene terephthalate, TRB-H supplied by Teijin Ltd., intrinsic viscosity 1.07)

ABS (Styrene/butadiene/acrylonitrile copolymer, SANTAC® UT-61 supplied by Mitsui Chemicals Inc.)

Glass fiber (Chopped strands ECS-03T-511, sized with urethane, supplied by Nippon Denki Glass K.K., fiber diamter 13 µm)

## Claims

1. A method for maintaining polycarbonate pellets, which comprises maintaining the potential of electrostatic charge of polycarbonate pellets (A) having adhering foreign matter having a particle diameter of 0.5 to 10 µm in an amount of 10,000 pieces/g or less in a range of ±10 kV in steps up to the step of melting the polycarbonate pellets (A) for producing a polycarbonate molded article.

2. The method of claim 1, wherein the polycarbonate pellets (A) have adhering foreign matter having a particle diameter of 0.5 to 10 µm in an amount of 5,000 pieces/g or less.

3. The method of claim 1, wherein the polycarbonate pellets (A) are maintained in an atmosphere coming under Class 1,000,000 or less.

4. The method of claim 1, wherein the potential of electrostatic charge of the polycarbonate pellets (A) are maintained in the range of ±7 kV.

5. The method of claim 1, wherein the polycarbonate pellets (A) are maintained in an atmosphere coming under Class 100,000 or less.

6. The method of claim 1, wherein the maintaining of the polycarbonate pellets (A) includes storage, transportation, transfer or molding.

7. The method of claim 1, wherein the polycarbonate pellets (A) are a product obtained while the potential of electrostatic charge of pellets is maintained in the range of ±10 kV, and the pellets are maintained in an atmosphere coming under Class 1,000,000 or less, in the step of extruding a molten polycarbonate to form strands and palletizing the strands.

8. The method of claim 1, wherein the polycarbonate pellets (A) are a product obtained by extrusion of a molten polycarbonate in the form of strands followed by cooling of the strands in weakly acidic water having a pH of 5.0 to 6.8 and pelletization.

9. The method of claim 8, wherein the weakly acidic water contains foreign matter having a particle diameter of 0.5 to 10 µm which foreign matter content is 100,000 pieces/cm³ or less and contains foreign matter having a particle diameter of 10 µm or greater which foreign matter content is 100,000 pieces/cm³ or less.

10. The method of claim 1, wherein the pellets of the polycarbonate are pellets of a polycarbonate obtained by a reaction between an aromatic dihydroxy compound and phosgene in an organic solvent.

11. The method of claim 1, wherein the polycarbonate pellets are pellets of an aromatic polycarbonate obtained by a reaction between an aromatic dihydroxy compound and a carbonate diester.

12. The method of claim 1, wherein the polycarbonate pellets are pellets of an aromatic polycarbonate obtained by a reaction between an aromatic dihydroxy compound and a carbonate diester compound, and the reaction uses 1 x 10⁻⁸ to 5 x 10⁻⁶ equivalent weight, per mole of the aromatic dihydroxy compound, of an alkali metal compound and 1 x 10⁻⁵ to 5 x 10⁻³ equivalent weight, per mole of the aromatic dihydroxy compound, of a nitrogen-containing basic compound as a catalyst for polymerization of the polycarbonate.

13. The method of claim 12, wherein the alkali metal compound contains a lithium compound or a cesium compound.

14. A molded article formed of the polycarbonate pellets obtained by the method of claim 1.

15. An optical disk substrate formed of the polycarbonate pellets obtained by the method of claim 1.

16. A polycarbonate-containing resin composition comprising a polycarbonate component from the polycarbonate pellets obtained by the method of claim 1 and a polyester component or a styrene-containing resin component.

17. The resin composition of claim 16, which further contains a filler.
